# EUROPEAN PATENT APPLICATION

(11) **EP 4 489 271 A1**
(43) Date of publication of application: **08.01.2025**
(21) Application number: 23763039.7
(22) Date of filing: 24.02.2023
(51) Int. Cl.: H02K 53/00, H02K 35/02

(54) **MAGNETIC DEVICE SUITABLE FOR USE AS A POWER GENERATOR OR DRIVE MOTOR**

(30) Priority: 02.03.2022 ES 202230346 U
(71) Applicant: Trofymchuk, Oleksiy, 08911 Badalona (ES)
(72) Inventor: Trofymchuk, Oleksiy, 08911 Badalona (ES)
(74) Representative: Fernández-Pacheco, Aurelio Fernández
(86) International application number: PCT/ES2023/070101
(87) International publication number: WO 2023/166234

(57) **Abstract**

Disclosed is a magnetic device suitable for use as a power generator or drive motor, which comprises a shaft (2) to which are coupled two concentric circular bodies (3.4). one inner and one outer, provided with a plurality of magnets (5) arranged radially, with successively alternating positive and negative polarity, a central magnetic-field-generating block (6) being fixedly coupled between the circular bodies (3, 4). An external element causes the first circular body (3) to rotate, thereby exciting the magnetic-field-generating block (6), which in turn causes the second circular body (4) to rotate in the opposite direction. The generator block (6) is formed by a plurality of overlapping cores (7) and is disposed concentrically with the shaft (2) between the inner circular body (3) and the outer circular body (4).

## Description

### PURPOSE OF THE INVENTION

The invention, as stated in the title of the present specification, relates to a magnetic device suitable for use as a power generator or as a drive motor which brings to the function for which it is intended advantages and characteristics, described in detail below, which represent an improvement on the state of the art.

The subject matter of the present invention relates to a magnetic device of the type consisting of an assembly comprising, essentially, a shaft with two circular bodies with rotating magnetic poles and a central magnetic field generator block, which uses the repelling capacity of the magnetic poles with opposite signs to generate an electric current when excited by a magnetic field, in order to, from an initial external thrust that causes a first circular body of magnetic poles to rotate, generate electrical energy with a high level of power thanks to the particular configuration of the core of the magnetic field generator block with overlapping ends and the arrangement of the magnetic poles in the circular bodies which in turn cause the second circular body to rotate in the opposite direction, increasing the magnetic field generated and, in addition, kinetic energy is generated which can also be harnessed, with the particularity that these circular bodies and the magnetic field generator block have a radial configuration which, among other advantages, makes it possible to increase the power of the device by increasing its thickness, without increasing the diameter of the assembly and, therefore, without occupying more space, at least in one plane of the space.

### FIELD OF APPLICATION OF THE INVENTION

The field of application of the present invention falls within the sector of the industry dedicated to the manufacture of apparatus, systems and devices for the generation of electrical energy, focusing particularly on the field of electric generators or magnetic drive motors.

### BACKGROUND TO THE INVENTION

As is well known, an electrical generator is a device capable of maintaining 10 an electrical potential difference between two of its points (called poles or terminals) transforming mechanical energy into electrical energy.

This transformation is achieved by the action of a magnetic field on the electrical conductors arranged on an armature (stator). If a relative movement is produced mechanically between the conductors and the magnetic field, an electromotive force (E.M.F.) is generated. This system is based on Faraday's law.

On the other hand, the rotor of some electric motors works the other way round harnessing electrical energy to generate motion, since in this type of electric motor-generator, the rotor is the component that turns (rotates) and which, together with its fixed counterpart, the stator, constitutes the fundamental assembly for the transmission of power.

By means of document P201630853, whose holder is the applicant of the present invention, a magnetic device is already known in the state of the art that exploits these capabilities to combine both possibilities to generate electrical energy from a magnetic field and kinetic energy determined by the movement caused by the magnetic field, and can take advantage of the kinetic energy for the transmission of motion.

However, while such a magnetic device satisfactorily complies with the said objective, being suitable for use as a power generator or drive motor, it can be improved, in particular as regards the arrangement of the elements it comprises, in particular the arrangement of the members with the magnetic poles and of the magnetic field generating block, being the essential objective of the present invention to provide an improved solution to the structure of thereof which, by means of a different configuration and arrangement of said elements, among other advantages, makes it possible to increase the power of the device without increasing the volume of the whole.

Furthermore, it should be noted that, at least on the applicant's side, no other magnetic device suitable for use as a power generator or drive motor with the same or similar technical and constitutive characteristics as the one claimed here is known to exist.

### EXPLANATION OF THE INVENTION

The magnetic device suitable for use as a power generator or as a drive motor which the invention proposes is the ideal solution to the above-mentioned objective and improves on what is currently known, with the characterising details which make it possible and which distinguish it conveniently set out in the final claims accompanying the present description.

Specifically, the device that the invention proposes, as mentioned above, is a magnetic device which, as is known from the aforementioned document, consists of an assembly essentially comprising a shaft with two circular bodies fitted with rotating magnetic poles (rotors) and a block generating a fixed central magnetic field (stator), which uses the repelling capacity of the magnetic poles with opposite signs to generate an electric current when excited by a magnetic field, in order to, from an initial external thrust that rotates a first circular body of magnetic poles, generate electrical energy with a high power level thanks to the particular configuration of the cores of the magnetic field generator block with overlapping ends and the arrangement of the magnetic poles in the circular bodies cause the second circular body to rotate in the opposite direction, increasing the magnetic field generated and also generating kinetic energy that can also be harnessed.

And, on the basis of this configuration, the device of the present invention is distinguished by the fact that the aforementioned circular bodies (rotors) and the central magnetic field generator block (stator), instead of consisting of two discs that are attached to the shaft with the possibility of rotation and being located above and below an intermediate winding located between both without the possibility of rotation, have a radial configuration, i.e., a configuration of concentric bodies around the shaft where:
- a first circular body or inner body, smaller in diameter, is placed in the centre of the assembly with the polarised magnets facing outwards, being coupled to the rotating shaft (internal rotor),
- a second circular body or outer body, larger in diameter, is positioned at the perimeter end of the assembly with the polarised magnets facing inwards, also being coupled to the central rotating shaft (external rotor),
- and where the magnetic field generating block, which is also circular, consists of a rim formed by at least a plurality of cores with overlapping ends, the diameter of which is such that it is located between the inner circular body and the exterior circular body, being in this case attached to the shaft without the possibility of rotation (stator).

In addition, the device comprises an external element that imparts motion to a first rotating circular body, for example the internal one, which causes the generation of a magnetic field that, in turn, determines the rotation, in the opposite direction of the second rotating circular body.

The device of the invention, among other advantages, makes it possible to increase the power of the device by increasing its thickness but without enlarging the diameter of the assembly and therefore without taking up more space, at least on one plane of space.

Thus, in one embodiment, the magnetic field generator block may consist of a rim comprising a plurality of cores with pieces of opto-materials and similar materials capable of generating the magnetic field when attacked by photons so as not to include any winding of conductive wire. And, in a preferred embodiment, the magnetic field generating block comprises at least one rim consisting of a plurality of cores with overlapping ends each of which includes a winding of conductive wire, with the advantage that, in such a case, the winding of conductive wire of the coils can be as long as desired without increasing the diameter of the assembly.

This is made possible by the fact that the height of the cores defining the rim of the magnetic field generator block or winding can vary and be larger or smaller, as appropriate, and the inner and outer circular bodies with the polarised magnets will also have a similar height.

Furthermore, in another embodiment, the device may comprise several magnetic generator rims or windings stacked one on top of the other around the shaft to form several tiers, as well as several circular bodies with inner and outer polarised magnets also stacked in the same number of tiers, which can also increase the power of the device without changing the diameter of the assembly.

It should be noted that, in this implementation option, preferably, although not in a limiting manner, the polarised magnets of the inner and outer bodies will be displaced on each level with respect to the upper and lower levels in order to alternate the positive and negative polarity of the magnets and favour greater movement of these rotating bodies.

Finally, it should be noted that, in the embodiment in which the rim or rims of the magnetic field generator block consist of a plurality of cores with overlapping ends with a winding of conductive wire around each core, preferably, said winding, instead of being wound diagonally, that is, obliquely to the axis of the device, is wound transversally to the body forming the core, i.e. parallel to the shaft of the device, allowing the length of the core to be greater and, consequently, the power of the device to be greater.

### DESCRIPTION OF THE DRAWINGS

In order to complement the description made, and in order to contribute to better understanding the characteristics of the invention, a set of drawings accompanies this descriptive report, as an integral part thereof, in which, for illustrative purposes, the following has been represented:
Figure 1.- Shows a schematic plan view of an example of an embodiment of the magnetic device suitable for use as a power generator or drive motor covered by the invention, showing the configuration and arrangement of the main elements it comprises;
Figure 2.- Shows a schematic plan view of a preferred example of the magnetic field generating block of the device according to the invention, namely a winding consisting of a multi-core rim with overlapping ends and a winding of conductive wire perpendicular to it and parallel to the central shaft of rotation;
Figure 3.- Shows a schematic perspective view of another example of the design of the cores of the magnetic field generating winding in figure 2, in this case with a thicker configuration, i.e. of greater height, but with the same diameter;
Figure 4.- Shows a schematic perspective view of another example of the magnetic field generator block of the device, in this case consisting of a plurality of windings formed from circular rims of cores with overlapping ends stacked one on top of the other, increasing the power but not the diameter it occupies;

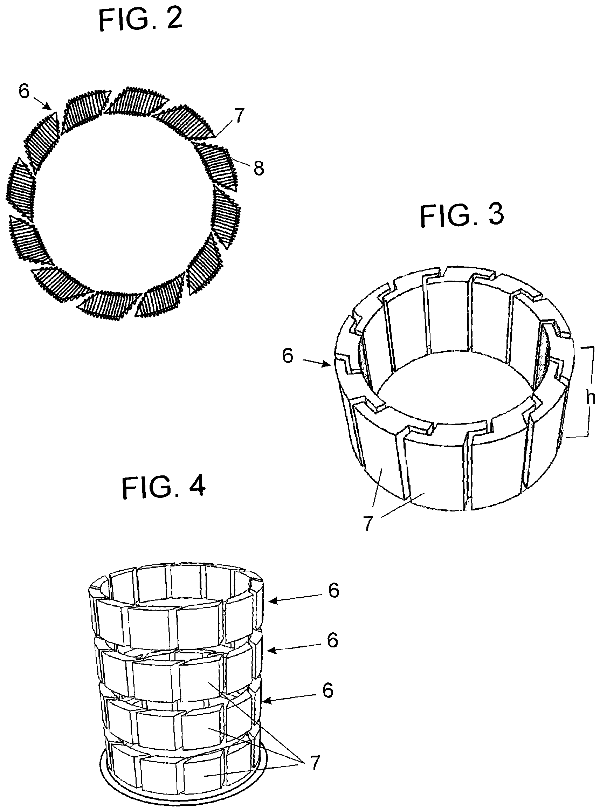

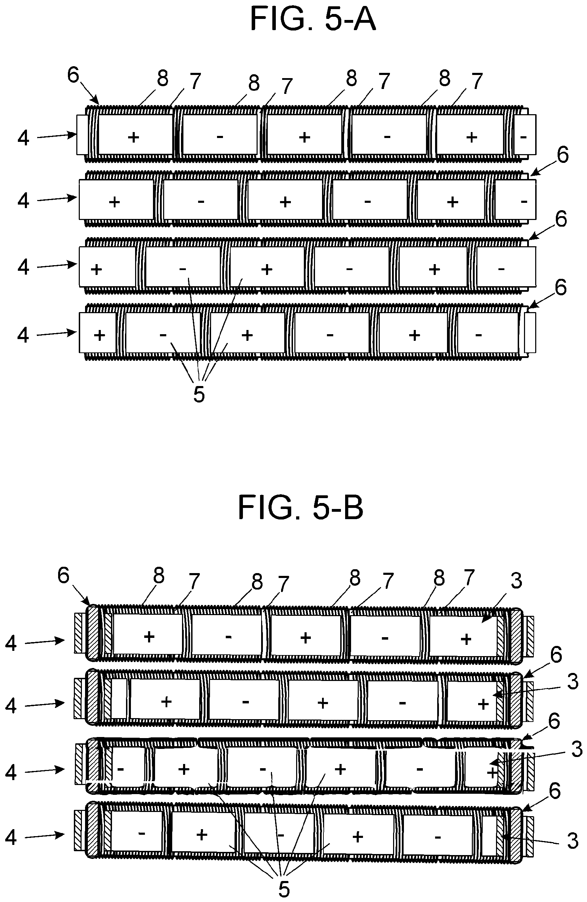

Figures 5-A and 5-B.- They show schematic views of the example of stacked winding cores shown in figure 4, in this case including the polarised magnets on the cores, figure 5-A showing a side elevation view which shows the alternation of polarity and the arrangement of the magnets of the respective outer circular bodies which are stacked, and figure 5-B a sectional elevation view showing the alternating polarity and the offset and sectional arrangement of the magnets of the respective inner circular bodies and the proportionally offset arrangement of the inner circular bodies in the direction opposite to that of the external magnets;
Figures 6 and 7.- They show two schematic perspective views of two examples of the generating field with opto-material prisms which generate the field when attacked by photons, namely two examples with cylindrical ducts to conduct such a photon attack;
Figure 8.- It shows a schematic perspective view of another example of an opto-material prism to generate a magnetic field, in this case with flat ducts to conduct photons; and
Figure 9.- It shows a schematic perspective view of the opposite end of the opto-material prisms shown in figures 6 to 8, showing the bottom cap.

### PREFERRED IMPLEMENTATION OF THE INVENTION

In view of the above-mentioned figures, and in accordance with the numbering adopted, several examples can be seen of non-limiting embodiments of the magnetic device suitable for use as a power generator or as a drive motor of the invention, comprising what is described in detail below.

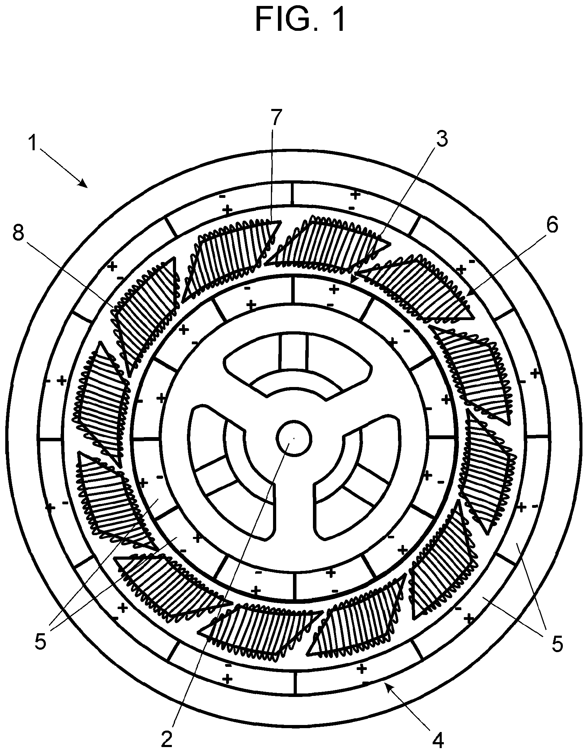

Thus, as can be seen in figure 1, the device (1) in question is of the type consisting of an assembly which, in the usual manner, comprises a shaft (2) to which are attached, with the possibility of rotation, at least two circular bodies (3, 4) fitted with several magnets (5) positioned radially with successively alternating positive and negative polarity and, coupled in a fixed manner between the circular bodies (3, 4), at least, one central magnetic field generator block (6), which preferably, comprises several cores (7) which overlap each other in such a way as to exploit the repelling ability of magnets (5) with opposite signs to generate an electric current when excited by a magnetic field, in order to, after an initial thrust by an external element (not shown), rotate a first circular body (3) which, in turn, causes the magnetic field generator block (6) to be excited and this, in turn, causes the second circular body (4) to rotate in the opposite direction, increasing the magnetic field generated by said block (6) and besides this generates kinetic energy which can also be harnessed. And, from said configuration, the device (1) of the present invention differs essentially in that the at least two circular bodies (3, 4) and the at least one central magnetic field generator block (6) have a radial configuration, that is to say, of concentric bodies around the shaft (2) where:
- the first circular body is an inner circular body (3), smaller in diameter, which is positioned in the centre of the assembly with the magnets (5) alternately polarised outwards;
- the second circular body is an outer circular body (4), having a larger diameter, which is positioned at the perimeter end of the assembly with the polarised magnets (5) facing inwards;
- and wherein the magnetic field generator block (6) having a plurality of cores (7) overlapping each other, is a rim with a diameter such that it is positioned between the inner circular body (3) and the outer circular body (4).

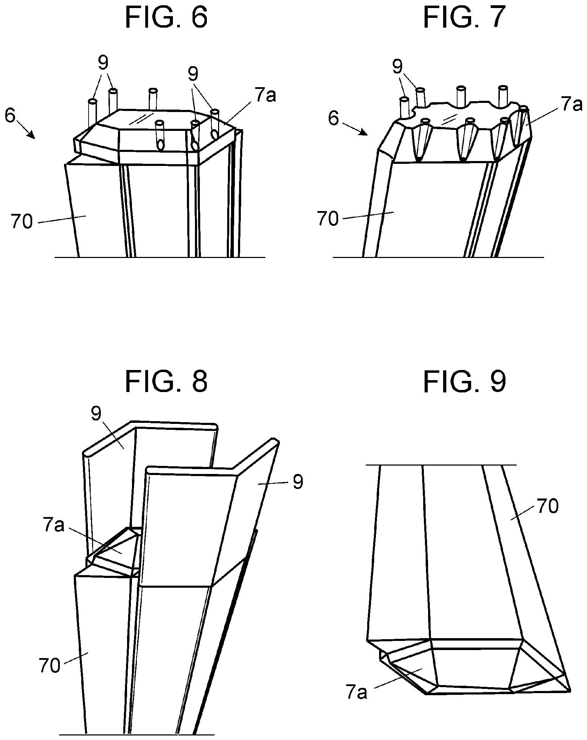

In one embodiment, the magnetic field generating block (6) consists of at least one rim made of a plurality of cores (7) overlapping each other, for example by a plurality of prisms (70), of opto-materials capable of generating the magnetic field when attacked by photons, so that they do not include any winding of conductive wire, which, as depicted schematically in figures 6 to 9, are preferably topped by some reflecting bodies (7a) over which impinge various ducts (9) through which photons are conducted to generate the magnetic field.

In one embodiment (figures 6 and 7) such conduits (9) may be cylindrical ducts leading to peripheral points of the reflector (7a). And in another embodiment (figure 8), the ducts (9) are flat pieces that conduct the photons to a portion of the perimeter of the reflecting body (7a).

In any case, depending on which side the photons penetrate through said ducts (9), the magnetic field rotates in one direction or the other.

In addition, as shown in figure 9, the opposite end of the opto-material prism (7) is closed by a cover (7b).

And, in another embodiment, the magnetic field generator block (6) consists of at least one rim made up of a plurality of overlapping cores (7), each of which includes a winding (8) of conducting wire, which, as shown in figure 2, is preferably wound transversely to the body making up each core (7), i.e. parallel to the shaft (2) of the device.

In any case, the cores (7) defining the rim of the magnetic field generator block (6) are of variable height (h), but always the same between those of the rim itself, as shown in figure 3, which may even be taller than wide, and the height of the inner (3) and outer (4) circular bodies and the polarised magnets (5) included in them may also vary accordingly.

In another embodiment, the device (1) comprises several magnetic field generating rims (6) stacked one on top of the other around the shaft (2) forming several tiers, as shown in figure 4, as well as several circular bodies with magnets which are polarised interior ones (3) and outer ones (4) equally stacked on the same number of tiers.

Preferably, as shown in the schematic representation in figure 5, the polarised magnets (5) of the inner (3) and outer (4) circular bodies are displaced at each level with respect to the upper and lower levels in order to intersperse the positive and negative polarity of the magnets. It is important to note that, in this variant of implementation, the number of nuclei (7) with winding (8) of the magnetic field generating rim(s) (6) and magnet(s) (5) on the rotors defining the inner (3) and outer (4) rims are always the same in one and others and of an even number, i.e., 2, 4, 8, etc.

And, in the case of comprising two or more sets of stacked rims, the displacement of the alternately polarised magnets (5), both in the rotor of the external rim (4) (figure 5-A) and in the rotor of the internal rim (3) (figure 5.B), is a proportional and regular displacement that depends on the number of stacks comprising the device, such that, if the device has two tiers of rotors (3, 4), the displacement of the magnets (5) of one with respect to the other is 50%, if the device has 3 sets of rotors (3, 4) stacked, the displacement of the magnets (5) between those of one rim and the one immediately above or below is 33%, if there are four stacks the displacement of the magnets (5) between adjoining stacks is 25% and so on. In addition, displacement on the magnets (5) of each rotor stack of the outer rims (4) (figure 5-A) is successively in one direction, while the displacement on the magnets (5) of each rotor stack of the inner rims (3) is in the opposite direction (figure 5-B).

The nature of the present invention having been sufficiently described, as well as the manner of putting it into practice, it is not considered necessary to explain it further for any expert in the field to understand its scope and benefits.

## Claims

1. A magnetic device suitable for use as a power generator or drive motor, comprising an assembly comprising a shaft (2) to which are coupled, with the possibility of rotation, at least two circular bodies (3, 4) fitted with several magnets (5) positioned radially with successively alternating positive and negative polarity and, coupled in a fixed manner between the circular bodies (3, 4), at least a block generating a central magnetic field (6) and an external element that rotates a first circular body (3) which in turn causes the excitation of the magnetic field generator block (6) and this, in turn, causes the second circular body (4) to rotate in the opposite direction, **characterised by** the fact that the at least two circular bodies (3, 4) and the at least one magnetic field generator block (6) have a radial configuration, i.e. of concentric bodies around the shaft (2) where:
- the first circular body is an inner circular body (3), smaller in diameter, which is positioned in the centre of the assembly with the magnets (5) alternately polarised outwards;
- the second circular body is an outer circular body (4), of larger diameter, which is positioned at the perimeter end of the assembly with the magnets (5) facing inwards;
- and wherein the magnetic field generator block (6) having a plurality of cores (7) overlapping each other, is a rim with a diameter such that it is positioned between the inner circular body (3) and the outer circular body (4).

2. Magnetic device suitable for use as a power generator or as a drive motor, according to claim 1, **characterised in that** the generator block of the magnetic field (6) consists of at least one rim made up of a plurality of cores (7) of opto-materials capable of generating the magnetic field when attacked by photons.

3. Magnetic device suitable for use as a power generator or as a drive motor, according to claim 1, **characterised in that** the magnetic field generator block (6) consists of at least one rim made up of a plurality of overlapping cores (7), each of which includes a winding (8) of conductive wire.

4. Magnetic device suitable for use as a power generator or as a drive motor, according to claim 3, **characterised in that** the winding (8) of conductive wire is wound transversely to the body forming each core (7), i.e. parallel to the shaft (2) of the device.

5. Magnetic device suitable for use as a power generator or drive motor, according to any one of claims 3 or 4, **characterised in that** the cores (7) defining the rim of the magnetic field generator block (6) are of variable height (h), but identical among those of the rim itself, and may even be taller than they are wide.

6. Magnetic device suitable for use as a power generator or as a motor drive system, according to any of claims 3 to 5, **characterised in that** it comprises several magnetic field generating rims (6) stacked one on top of the other around the shaft (2) forming several tiers, as well as several circular bodies with inner (3) and outer (4) polarised magnets (5) also stacked on the same number of tiers.

7. Magnetic device suitable for use as a power generator or as a drive motor, according to claim 6, **characterised in that** the polarised magnets (5) of the inner (3) and outer (4) circular bodies are displaced at each level with respect to the upper and lower levels in order to intercalate the positive and negative polarity thereof.
